# EUROPEAN PATENT APPLICATION

(11) **EP 2 423 628 A2**
(43) Date of publication of application: **29.02.2012**
(21) Application number: 11005854.2
(22) Date of filing: 18.07.2011
(51) Int. Cl.: F28D 9/00, F28D 21/00, F28F 19/04, F28F 21/00, F24F 12/00

(54) **Heat exchanger for air ventilation system**

(30) Priority: 18.07.2010 EP 10007389
(71) Applicant: Université de Mons-Hainaut, 7000 Mons (BE)
(72) Inventor: Rioboo, Romain, 7022 Hyon (BE); De Coninck, Joël, 7022 Mesvin (BE)
(74) Representative: Powis de Tenbossche, Roland

(57) **Abstract**

Heat exchanger comprising a membrane system defining a series of channels for the passage of air,
whereby said membrane has a thickness of less than 1000µm, is(are) resistant to water and water vapor, and has(have) a multi-layered structure comprising :
(a) a central core layer having a thermal conductivity of less than 0.50 W/(m.K) ;
(b) a first outer coating layer, and
(c) a second outer coating layer,

whereby said outer coating layers are made of superhydrophobic material and a surface roughness having a root mean square surface roughness between 1.1µm and 20µm, and a Wenzel roughness factor above 1.2.

## Description

The present invention has for subject matter a heat exchanger for air ventilation system adapted to supply air in a room and to exhaust air from a room.

Various heat exchangers have already been proposed for recovering heat or calories from the air exhausted from a room, so as to heat or preheat fresh air before entering into said room.

Such heat exchangers have been made in heat conductive materials, such as in aluminum, with one face directed towards the exhaust air and with the opposite face directed towards the fresh air to be supplied to the room. Such heat exchangers have some drawbacks, such as forming heat bridge between the outer face of a wall and the inner face of the wall, water condensation, oxidation, agglomeration of dusts, growth of bacteria, etc.

Such heat exchangers are also quite expensive.

It has also been proposed in US-A-718866 and WO-A-2004/070284 a heat exchanger having a heat exchanger body made of zig-zag folded paper. Such heat exchanger body are effective for a correct heat exchange between two air flows for a short period of time. It has been observed that dust and fungi growth was clogging partially or totally some channels, whereby reducing the heat transfer, but also causing health problem, such as for asthmatic peoples, elderly people, etc.

The present invention has for aim a heat exchanger reducing or preventing one or more of said problems, while ensuring for a long period a good heat exchange between the exhaust air and the fresh air.

Device for efficient heat transfer has been proposed in EP2028432, the content of which is incorporated by reference. Said device is adapted for a two-phase cooling heat transfer and is not appropriate for heat transfer between an exhaust room air flow and a supply air flow.

The invention relates to a heat exchanger for air ventilation system adapted to supply air in a room and to exhaust air from a room, whereby said heat exchanger is at least adapted for recovering heat from the exhausted air and for transferring heat to the supplied air,
whereby said heat exchanger comprises a membrane system comprising one or more membranes defining there between a series of channels for the passage of air,
whereby said membrane(s) has(have) a thickness of less than 1000µm, is(are) resistant to water and water vapour, and has(have) a multi-layered structure comprising:
(a) a central core layer comprising fibres, advantageously cellulosic fibres and/or alginate fibres, said central core layer having a thickness, measured between a first face and a second face opposite to said first face, of less than 750µm, advantageously less than 500µm, said central core layer having a thermal conductivity of less than 0.50 W/(m.K) in a direction perpendicular to the thickness direction;
(b) a first outer coating layer covering the first face of central core layer, optionally with interposition of one or more intermediate layers or means, and
(c) a second outer coating layer covering the second face of central core layer, optionally with interposition of one or more intermediate layers or means,
whereby said first and second outer coating layers are made of superhydrophobic material and have a thickness of less than 100µm, advantageously less than 50µm, and
whereby the first outer coating layer and the second outer coating layer applied on the said central core layer, optionally with one or more intermediate layers or means define each an outer face with surface roughness having:
- a root mean square surface roughness measured with a magnification factor of 5, i.e. at a scale of approximately 2.2 mm, as well as with a magnification factor of 50, i.e. at a scale of approximately 220 µm; comprised between 1.1µm and 20µm, advantageously between 5µm and 16µm, and
- a Wenzel roughness factor (defined as the ratio between the real surface area and the apparent surface area) above 1.2, advantageously above 2 at a magnification factor of 5 and at magnification factor 50.

The Wenzel roughness factor is advantageously determined on areas of the outer coating, said areas having a size of 2.55mm x 1.91mm, as well as of 255µm x 191µm. Preferably, the Wenzel roughness factor is an average factor determined on at least three, most preferably at least 5 different first (large) areas of the outer coating having a size of 2.55mm x 1.91mm, as well on at least three (most preferably at least 5) different second (small) areas having a size of 255µm x 191µm for each of said different first (large) areas. Superhydrophobicity is a characteristic of a surface for which the so-called receding static contact angle of a water drop is greater than 130°, advantageously above 135°, preferably above 140°, while the hysteresis (difference between the advancing and the receding static contact angles) is below 10°, advantageously below 5°, preferably less than 3°.

The static contact angle is for example measured by depositing a drop of water on a solid surface located in a horizontal plane, and by measuring said angle by a goniometer. Advancing and receding static contact angles are measured at the end of an injection process, for advancing static contact angles and respectively of a removing process for receding static contact angles. Another method is used to measure the advancing and receding static contact angles by sliding a drop over the superhydrophobic surface.
Such a method is disclosed in more details in Langmuir 2008, 24, 9508-9514, Superhydrophobic Surfaces from Various Polypropylenes, Rioboo et al, see especially point (c) Wettability Measurements.

The outer faces have also advantageously an arithmetic mean surface roughness comprised between 1µm and 20µm, preferably between 2µm and 15µm, determined with a magnification factor of 5 and with a magnification factor of 50.

The root mean square roughness, the arithmetic mean roughness, the Wenzel roughness factor of the surface roughness can be determined at magnification 5 and/or 50, but are preferably determined at both magnifications of 5 and 50, for example by means of an optical profilometer, stylus profilometer or any other device measuring surface roughness or topography with an accuracy at nanometric scale in the vertical direction. For example the surface parameters can be determined by using a Wyko ® Optical Profilers, sold by Veeco Instruments, USA.

The membrane has also advantageously as such a thermal conductivity of less than 0.50 W/(m.K) in a direction perpendicular to its thickness, for example less than 0.35 W/(m.K).

According to an advantageous detail of an embodiment, the first and second outer coatings form a water vapour barrier reducing water uptake to less than 3% by weight, advantageously to less than 2% by weight, when the heat exchanger is placed in an air environment with a relative humidity of more than 95% and with a temperature of 20°C, preferably of 40°C, for a time period of at least 24hours, advantageously of at least 48hours, for example for period of more than 1 week, such as advantageously more than 6 months or more than 1 year.

According to a further advantageous detail of an embodiment, at least one or more portions of the central core layer, before being provided with the said first and second outer coatings, is/are porous.
In said embodiment, preferably :
- at least a part of the material used for making the first and/or second outer coating layer is preferably present within pores of the central core layer, and/or
- the first and/or second coating layers is/are attached to the central core layer with interposition of an intermediate layer, and/or
- at least a part of the material used for making the intermediate layer is present within pores of the central core layer.

According to further preferred details,
- at least one or more portions of the central core layer, before being provided with the said first and second outer coatings, has/have arithmetic mean surface roughness comprised between 1.1µm and 20µm, and/or
- (especially for embodiments for recovering heat from the exhausted air with a temperature below 60°C) the first and second outer coating layers comprise thermoplastic polymer(s) or copolymer(s) with a melting point comprised between 95°C and 280°C, preferably comprised between 150°C and 200°C, and/or
- the central core layer and the optional intermediate layer(s) are resisting to temperature higher than 95°C, and/or
- the central core layer and the first and second outer coating layers are selected so as to ensure a swelling of less than 2% in a direction perpendicular to the thickness when the membrane is placed in an air environment with a relative humidity of more than 95% and with a temperature of 20°C for a time period of at least 24hours, advantageously of at least 48hours, and/or
- the central core layer comprises, for example for extra safety purpose, while being often even not required, one or more anti bacterial agents and/or anti fungi agents, however in case some of said agent(s) is/are used, the amount required can be reduced to extremely low amount.

According to a specific embodiment, the heat exchanger or a part thereof (for example as a heat exchanger body) has the form of a flexible sheet fanfolded so as to define a series of channels for the passage of air, said heat exchanger further comprising :
- means for directing exhaust air towards one or more channels of the heat exchanger,
- means for directing the exhaust air after its passage through channels of the heat exchanger,
- means for directing supply air towards one or more channels of the heat exchanger, and
- means for directing supply air after its passage through channels of the heat exchanger.

Advantageously, the heat exchanger further comprises one or more fans and/or one or more means adapted for ensuring a ground connection with the fan folded flexible sheet.

The invention further relates to the use of a heat exchanger for recovering heat from the exhaust air from a room and for using said heat for preheating or heating the supply air to a room.

Details and characteristics of embodiment of the invention will appear from the following description in which reference is made to the attached drawings representing preferred embodiments, given as examples only.

In said drawings,
- figure 1 is a schematic view of a heat exchanger comprising a membrane folded in zig-zag;
- figure 2 is an enlarged view in cross section of the membrane used in the heat exchanger of figure 1;
- figures 3 to 5 is an enlarged view in cross section of other membranes according to the invention;
- figure 6 is a schematic view of another heat exchanger of the invention, and
- figure 7 is a schematic flow sheet of a method for the preparation of a heat exchanger.

### Description of Preferred Embodiments

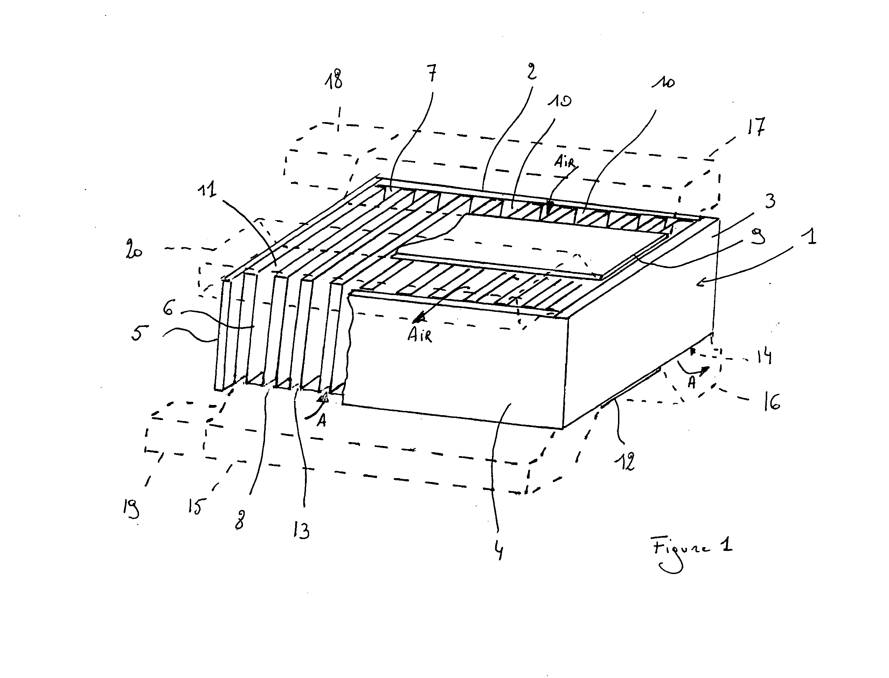

The heat exchanger of figure 1 has the form of a body 1 having a substantially parallepipedic shape. The body 1 comprises four lateral walls 2,3,4 and 5, forming an envelope in which extends a folded membrane 6 whereby defining between the lateral walls 2 and 4 a series of channels 7 which are open upwards, and a series of channels 8 which are open downwards. An upper plate 9 covers the central portion of the channels 7, whereby defining a series of inlet openings 10 and a series of outlet openings 11 for the channels 7.

A lower plate 12 covers the central portion of the channels 8, whereby defining a series of inlet openings 13 and a series of outlet openings 14 for the channels 8.

Said heat exchanger body is advantageously provided with a means 15 for directing exhaust air from a room into the channels 8, a means 16 for directing towards the exterior the exhaust air leaving the channels 8, a means 17 for directing fresh air into the channels 7, a means 20 for directing the fresh air leaving the channels 7 towards the room, and fans 18,19 for pushing the fresh air and the exhaust air into the channels 7,8.

The heat exchange is a counter flow heat exchange.

The folded membrane defines a series of substantially vertical exchange surface, two successive exchange surfaces being distant the one from the other by a distance for example of less than 3mm, such as from 1mm to 2mm.

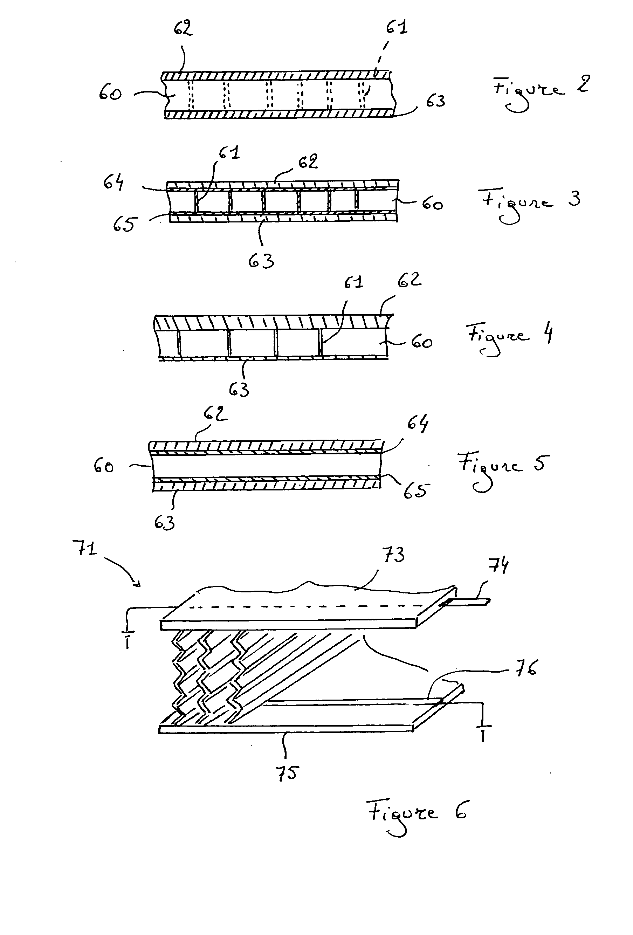

The structure of the membrane is shown in figure 2.

The membrane 6 comprises :
(a) a central core layer 60 made of porous paper (cellulose based) with a thickness of about 50µm, said layer being provided with punctures 61 and having a thermal conductivity of about 0.25 W/(m.K) in a direction perpendicular to the thickness direction, the said paper had also some unevenness;
(b) a first outer coating Polypropylene layer 62 covering a first face of central core layer 60, and
(c) a second outer coating Polypropylene layer 63 covering a second face of the central core layer 60.

The first and second outer coating polypropylene layer, for example made from atactic and/or isotactic and/or syndiotactic polypropylene, have been obtained by spraying a polypropylene solution (polypropylene being for example dissolved into an appropriate solvent system).

The polypropylene solution was sprayed onto each opposite faces of the core layer, so as to form, after drying and removal of the solvent system, a coating with a maximum thickness of about 30µm.

Polypropylene sprayed on both faces enters partly within the paper, so as to form some bridges between the two outer PP layers 62,63.

The paper prior to its coating was dried and/or pretreated by chemistry for rendering the faces of the paper more hydrophilic, for example by an oxidising step, such as by ozone treatment, water peroxide treatment, etc. The adherence of the PP on the paper is then further increased. When using a wet treatment, after the oxidising step, the paper is advantageously washed and dried.

After the PP coating operation of the paper, the paper was submitted to a flash drying at 120°C.

The so obtained coated paper had a total maximum thickness of about 120µm. The roughness of both faces was characterised by optical profilometry, said characterisation being carried out at a magnification of 5, as well as 50, so as to confirm that the outer faces have roughness properties as well as with low and high magnifications and in particular high aspect ratio quantified by the Wenzel roughness (or the so-called aspect ratio of the surface).

The outer faces were analysed with a Sensoscan PLU NEOX optical Confocal microscope (an Advanced Optical 3D Profiler sold by Sensofar, USA) able to take several images on a sample on different zones at two different magnifications 5X and 50X, providing several images (768 pixels x 576 pixels) corresponding to zones of 2.55mm x 1.91mm and 255µm x 191µm. Said analysis is based on thin film metrology combining Confocal Scanning, Phase Shift Interferometry, Vertical Scanning Interferometry and Spectroscopic Reflectometry.

The following mean parameters were measured by using the measure determined on at least three distinct images, preferably at least 10 distinct images, most preferably at least 20 distinct images, for each cm² (bidimensional area taken within a plane - bidimensional area substantially perpendicular to the thickness of the membrane) of the outer faces (average value are determined by arithmetic average of the value determined for said images for each cm²):
At magnification factor 5, images corresponding to zones of 2.55mm x 1.91 mm for the different and distinct zones of 1cm² of said both outer faces:
   - Arithmetic average surface roughness : between 9 and 10µm
   - Root mean square surface roughness : between 12µm and 15µm
   - Wenzel roughness factor : from 1.3 to 1.5
   - fractal dimension of the surface roughness : from 2 to 2.5
At magnification factor 50, images corresponding to zones of 255µm x 191µm for the different and distinct zones of 1cm² of said both outer faces :
   - Arithmetic average surface roughness : between 10 and 11µm
   - Root mean square surface roughness : between 12µm and 15µm
   - Wenzel roughness factor : from 3 to 5
   - fractal dimension of the surface roughness : from 2 to 2.5

When placing a water drop (5µL) onto the PP layer (placed in a horizontal plan), the static contact angle was measured using the method disclosed in details in Rioboo et al, 2008, Langmuir, "Superhydrophobic surfaces from various polypropylenes". An advancing static contact angle of about 150° and a receding static contact angle of about 146° were measured. Various surface zones of the outer coating were analysed.

The membrane was placed in a close vessel with a relative humidity of about 100% and a temperature of 40°C. After one week, four weeks and ten weeks, the absorption of water by the membrane was measured (by measuring a weight increase). The weight of the membrane remained stable, meaning that no water absorption occurred.
The test was further carried out at 60°C. No water uptake was observed after 10 weeks.

It was moreover observed that when using the membrane for heat exchange between an exterior air flow and a room air flow, there was substantially no dust and water deposition occurred. Even when placing dust and/or some water drop on a face of the membrane, the dust and water were expelled outside the body formed by the membrane.

The membrane was further tested to mustiness (Cladosporium with Penicillium). For said test, membranes were put in a closed vessel (volume of about 30liters) with an air atmosphere with a temperature of about 25°C and with a relative humidity of 97-99%. The membranes were cut in pieces which were deposited on a Petri dish filled with mustiness. As comparative sample, a piece of the central core layer (not provided with the PP coating layers) was deposited on a petri dish filled with mustiness. The surface of the pieces in contact with the mustiness was observed daily.

It appeared that after about 5 days, the untreated membrane (the core layer without coating layers) were provided with black spots of mustiness, showing the growth of mustiness. For the membrane of the invention, no growth of mustiness was observed after one week, after two weeks, and even after 6 months.

The CO₂ permeability of the membrane of the invention was measured. It appeared that the membrane of the invention was not permeable to CO₂ with a difference of pressure between the opposite faces of the membrane of 10⁶Pa or less.

Long term heat exchange test have shown that the heat exchange property were quite stable during the time, and that the loss of pressure for the air flowing through the heart exchanger was quite stable over a period of more than 6 months, meaning an easier control of the working of the fans and of the heat exchanger.

When using membrane with outer coating layers having a Wenzel roughness factor of less than 1.2 or a Root mean square roughness below 1µm or a contact angle of less than 120°, problem of stability of heat exchange properties occurred in function of the relative humidity, dust deposit, heat transfer through the membrane, etc.

In the embodiment of figure 3, the outer coating layers are 62,63 are deposited each on an intermediate layer 64,65, such as a glue layers (such as made of hot melt, the glue layer being continuous or made of various glue lines or glue points distant from each other) or a layer increasing the adherence of the PP outer layer.

In the embodiment of figure 4, the membrane is similar to that of figure 2, except that the thickness of the layer 62 was thicker than the thickness of the layer 63.

In the embodiment of figure 5, the membrane was similar to that of figure 2, except that the roughness of the layer 62 was greater than the roughness of the layer 63.

The heat exchanger of figure 6 comprises a body 71 made of a series of substantially vertical water resistant and impermeable to water vapour sheets 72, each having in cross section a series of zig zag portions. The top ends of the sheets 72 are fixed on a plastic plate 73 provided with an electric conducting wire 74 adapted to be connected to the ground. The bottom ends of the sheets 72 are also fixed on a plate 75 provided with an electric conducting wire 76 adapted to be connected to the ground.

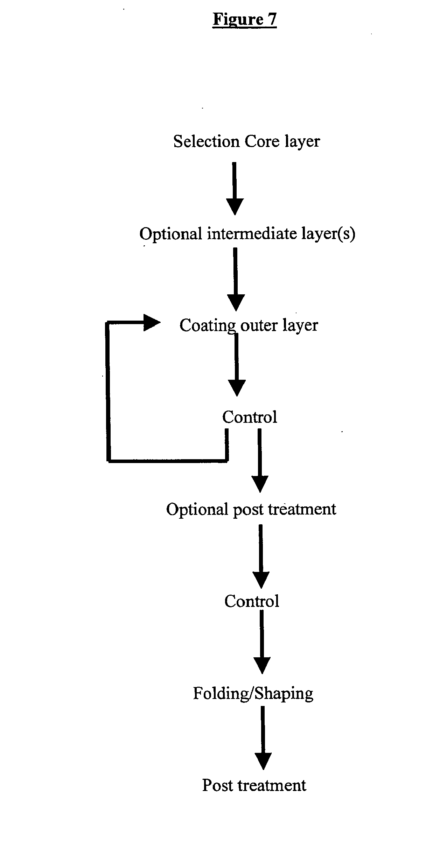

A general flow sheet of a preferred method of production of membrane suitable for the exchanger of the invention is disclosed in figure 7.

### A. Selection of the core layer

The core layer is preferably a flexible thin plate or film or membrane or mat or tissue. Said core layer is preferably porous and has, for its both faces, a roughness comprised between 1.1µm and 120µm.

The core central layer acts as support with at least some roughness, so as to induce some roughness after coating.
The core layer can be pretreated for removing dust, for improving the adhesion of the coating layer(s) or intermediate layer(s) or for controlling the roughness of the opposite faces.
For example, the faces are brushed for creating some roughness.
The faces can also be treated chemically (wet treatment) for increasing the adherence of hydrophobic treatment. Such chemical pretreatment is for example an acid treatment (weak or strong) for example with one or more mixtures disclosed in EP2028432A1, especially in claim 14. Such a chemical treatment can be made by dipping the layer into a solution, by brushing or painting or pulverising or nebulising a solution onto the faces.
In case of chemical wet treatment, the core layer is advantageously washed (with water) and dried.

After said possible treatment, the roughness of the dried layer is advantageously controlled.

The core layer can also be punctured so as to create holes extending from one face up to the opposite face.

Advantageous core layer is a cellulosic or paper layer with a thickness of 20µm to 200µm.

The core layer can also be treated with one or more solutions comprising one or more active agent, such as antistatic agents, anti bacteria agent.

The core layer, before being pretreated or after being pretreated can be provided with one or more electrical conductive wire or band portions for collecting potential static electricity for conducting it towards the ground.

Said central core layer has a thickness, measured between a first face and a second face opposite to said first face, of less than 750µm, advantageously less than 500µm, said central core layer having a thermal conductivity of less than 0.50 W/(m.K) in a direction perpendicular to the thickness direction.

### B. Optional coating with one or more intermediate layers

Such an optional intermediate layer or intermediate layers are for example layer(s) for increasing the adherence of the outer coating layers. Such layer(s) enter(s) advantageously within the porous structure of the central core layer. When providing both faces with such intermediate layers, material of one intermediate layer enters within pores so as to contact material of the other intermediate layer.

Such intermediate layer(s) can coat substantially continuously both opposite faces, but has advantageously the form of series of dots distant the one from the other. Such dots can be made by dot printing technology.

The intermediate coating layers are advantageously made of hot melt glue and have a thickness adapted for keeping at least sufficient roughness for the opposite faces of the core layer.

The coating operation is preferably carried out after a dry step, so as to ensure that substantially no water is present in the core layer. The coating operation is also preferably carried out in a dry atmosphere, such as with a relative humidity of less than 10%.

### C. Coating of the core layer and/or optional intermediate layers with the outer layers

The material for the outer layers, which can be the same or different, is for example selected with the hydrophobic coating material disclosed from paragraph 0027 to paragraph 0029 and from paragraph 0031 to 0050 of EP2028432A1

The method for applying said coating is one of the methods disclosed in paragraph 0050 of EP2028432A1, but is preferably adapted for keeping at least partly the roughness of the core material. Such a method is advantageously a spray coating using advantageously a dilute solution of the coating material, said solution comprising an appropriate solvent system.

Said coating operation is possibly repeated, for example in case zones of one or both faces of the core layer are not properly coated.

The coating operation is preferably carried out after a dry step, so as to ensure that substantially no water is present in the core layer.

Said outer coating layers have advantageously a thickness of less than 10µm.

The material used for the outer coating layers comprises advantageously (for example for extra safety), but often not required, one or more additive or active agents.

### D. Optional post treatment of the outer coating layer

Said post treatment is for example a heat treatment for ensuring a gluing of the outer layer with the intermediate layer or the core layer.

Said optional post treatment is for example adapted for increasing or improving the adherence of the coating layers with the core layer, or for adapting the roughness of the outer coating layer.

### E. Control of the surface properties of the membrane with the outer coating layers.

The roughness of the outer coating layers, the contact angle and the thermal conductivity in a direction perpendicular to the thickness are measured.
In case these properties are within the scope of the invention, the membrane is used for the preparation of the heat transfer system.

### F. folding or shaping the membrane into a heat exchanger body, optionally after a cutting operation of the membrane into distinct membrane pieces. Said folding or shaping can comprises one or more heating steps so as facilitate the bending of the membrane.

### G. Optional Post treatment after folding or shaping

Said optional post treatment is carried out for giving a quite stable form.

## Claims

**1.** Heat exchanger for air ventilation system adapted to supply air in a room and to exhaust air from a room, whereby said heat exchanger is at least adapted for recovering heat from the exhausted air and for transferring heat to the supplied air,
whereby said heat exchanger comprises a membrane system comprising one or more membranes defining therebetween a series of channels for the passage of air,
whereby said membrane(s) has(have) a thickness of less than 1000µm, is(are) resistant to water and water vapor, and has(have) a multi-layered structure comprising :
(a) a central core layer comprising fibers, advantageously cellulosic fibers and/or alginate fibers, said central core layer having a thickness, measured between a first face and a second face opposite to said first face, of less than 750µm, advantageously less than 500µm, said central core layer having a thermal conductivity of less than 0.50 W/(m.K) in a direction perpendicular to the thickness direction;
(b) a first outer coating layer covering the first face of central core layer, optionally with interposition of one or more intermediate layers or means, and
(c) a second outer coating layer covering the second face of central core layer, optionally with interposition of one or more intermediate layers or means,
whereby said first and second outer coating layers are made of superhydrophobic material and have a thickness of less than 100µm, advantageously less than 50µm, and
whereby the first outer coating layer and the second outer coating layer applied on the said central core layer, optionally with one or more intermediate layers or means define each an outer face with surface roughness having:
- a root mean square surface roughness measured with a magnification factor of 5, as well as with a magnification factor of 50, comprised between 1.1µm and 20µm, and
- a Wenzel roughness factor above 1.2 at a magnification factor of 5.

**2.** Heat exchanger of claim 1, in which the first and second outer coating layers have each an outer face with surface roughness having:
- a root mean square surface roughness measured with a magnification factor of 50, as well as with a magnification factor of 50, comprised between 10µm and 16µm, and
- a Wenzel roughness factor above 1.2 at a magnification factor of 50.

**3.** Heat exchanger according to any one of the claims 1 and 2, in which the first and second outer coatings form a water vapour barrier reducing water uptake to less than 3% by weight, advantageously to less than 2% by weight, when the heat exchanger is placed in an air environment with a relative humidity of more than 95% and with a temperature of 20°C for a time period of at least 24hours, advantageously of at least 48hours.

**4.** Heat exchanger according to claim 3, in which the first and second outer coatings form a water vapour barrier reducing water uptake to less than 3% by weight, advantageously to less than 2% by weight, when the heat exchanger is placed in an air environment with a relative humidity of more than 95% and with a temperature of 40°C for a time period of at least 24hours, advantageously of at least 48hours.

**5.** Heat exchanger according to any one of the preceding claims, in which at least one or more portions of the central core layer, before being provided with the said first and second outer coatings, is/are porous.

**6.** Heat exchanger according to the preceding claim, in which at least a part of the material used for making the first and/or second outer coating layer is present within pores of the central core layer.

**7.** Heat exchanger according to any one of the preceding claims, in which the first and/or second coating layers is/are attached to the central core layer with interposition of an intermediate layer.

**8.** Heat exchanger according to claims 5 and 7, in which at least a part of the material used for making the intermediate layer is present within pores of the central core layer.

**9.** Heat exchanger according to any one of the preceding claims, in which at least one or more portions of the central core layer, before being provided with the said first and second outer coatings, has/have a surface roughness having a root mean square surface roughness measured with a magnification factor of 5, as well as with a magnification factor of 50, comprised between 1.1µm and 30µm, advantageously between 5µm and 25µm.

**10.** Heat exchanger according to any one of the preceding claims, for recovering heat from the exhausted air with a temperature below 60°C, in which the first and second outer coating layers comprise thermoplastic polymer(s) or copolymer(s) with a melting point comprised between 95°C and 200°C, preferably comprised between 150°C and 200°C.

**10.** Heat exchanger according to the preceding claim, in which the central core layer and the optional intermediate layer(s) are resisting to temperature higher than 95°C.

**11.** Heat exchanger according to any one of the preceding claims, in which the central core layer and the first and second outer coating layers are selected so as to ensure a swelling of less than 2% in a direction perpendicular to the thickness when the membrane is placed in an air environment with a relative humidity of more than 95% and with a temperature of 20°C for a time period of at least 24hours, advantageously of at least 48hours.

**12.** Heat exchanger according to any one of the preceding claims, in which the central core layer comprises one or more anti bacterial agents and/or anti fungi agents.

**13.** Heat exchanger according to any one of the preceding claims, which has the form of a flexible sheet fanfolded so as to define a series of channels for the passage of air, said heat exchanger further comprising :
- means for directing exhaust air towards one or more channels of the heat exchanger,
- means for directing the exhaust air after its passage through channels of the heat exchanger,
- means for directing supply air towards one or more channels of the heat exchanger, and
- means for directing supply air after its passage through channels of the heat exchanger.

**14.** Heat exchanger according to claim 13, which further comprises one or more fans.

**15.** Heat exchanger of claim 13 or 14, which comprises a means adapted for ensuring a ground connection with the fan folded flexible sheet.

**16.** Use of a heat exchanger according to any one of the preceding claims for recovering heat from the exhaust air from a room and for using said heat for preheating or heating the supply air to a room.
